# EUROPEAN PATENT APPLICATION

(11) **EP 0 581 034 A1**
(43) Date of publication of application: **02.02.1994**
(21) Application number: 93110410.3
(22) Date of filing: 30.06.1993
(51) Int. Cl.: F16K 1/36, F16K 1/00

(54) **Valve with axially mobile valving element, for gas cylinders and similar uses**

(30) Priority: 29.07.1992 IT MI921850
(71) Applicant: FRO SALDATURA S.P.A., I-37135 Verona (IT)
(72) Inventor: Giusti, Guglielmo, I-37135 Verona (IT); Beaco, Bruno, I-37135 Verona (IT); Arzenton, Marco, I-37135 Verona (IT)
(74) Representative: Giambrocono, Alfonso, Dr. Ing.

(57) **Abstract**

A valve (10) for gas cylinders, cylinder racks or stacks, cylinder filling racks and similar uses, is of the type with an axially moving valving element without a return spring, and comprises: a valve body (12) provided with a thread (14) enabling the valve (10) to be mounted in position, this threaded part enclosing a first axial gas passage channel (18) opening into the central hole (76) of the valve seat (42); a threaded lateral protuberance (22) encloses a second channel (24, 26) which opens into the inner chamber (28) of the valve (10); a valving element (30) in the form of a piston movable in both directions within the chamber (28) and carrying on its front face a sealing insert (40) to be pressed against the valve seat (42); a seal device providing a seal between the stem (32) of the valving element (30) and the valve body (12); and a mechanism for operating the valving element (30), comprising a threaded operating pin (58) screwable within a gland nut (56) which also maintains the seal device in position, an operating handwheel (60) being connected to the threaded pin (58). The valving element comprises a coaxial front peg (70) having a frusto-conical free end for closing the central hole (76) in the valve seat (42), there being a clearance of between 0.0 mm and 0.1 mm between the peg (70) and the hole (76) when the valve (10) is closed. The frusto-conical end of the peg (70) preferably has a taper of between 1° and 7°. The valving element (30) can also act as a gate valve against the second channel (24, 26).

## Description

This invention relates to a gas valve, in particular for cylinders containing liquefied or dissolved gas, for cylinder racks or stacks, cylinder filling racks and similar uses.

Currently available valves of this kind are mainly of the type in which the valving element moves axially and circularly simultaneously relative to the valve seat. These valves are known as rotatable threaded plug valves. They suffer from various drawbacks, and in particular considerable wear of the sealing insert in the valving element, so that the valve life is fairly short. In addition in such valves the wear of the rotatable threaded plug is significant, with the formation of metal dust which contaminates the gas and enhances the wear of the sealing insert by abrasion. This means that the valve has to be more tightly turned to ensure that the valve seals, and in addition the dust constitutes a possible ignition source if the gas is flammable, such as oxygen.

A further drawback of such known valves is that they are difficult to operate by those operators unable to exert the required force, which may be high. This is so for example in the case of female personnel, much used in hospitals and surgeries. In the case of an oxygen cylinder valve, the user may be the patient himself, who could be provided with a cylinder for home use but who may be incapacitated through illness or old age.

To reduce the force or torque required for opening and closing such known valves, lubricant greases are often used compatible with the type of gas contained in the cylinder and applied to the thread of the threaded plug. This grease therefore comes into direct contact with the gas, leading to the following problems:
1) contamination of the gas in contact with the grease; and
2) in the case of oxygen, an increase in the ignition risk under adiabatic compression.

This latter problem is a result of the fact that even if the grease is compatible with the gas used, only a quantity slightly greater than the prescribed amount needs to be applied to cause adiabatic triggering. It should be noted that the prescribed grease quantities are very small indeed, so that it is not easy to meter them exactly.

Valves are already known in which the valving element moves only axially, so that the relative sealing insert rests against the valve seat without rotating. Currently available valves of this kind are substantially of two types:
A) valves in which the valving element is opened by a return spring;
B) valves in which the valving element is moved mechanically without the aid of a spring.

The first type of valve has basically the following drawbacks:
a) possible difficulty in putting the cylinder under vacuum (so-called cylinder "cleaning"), before filling it with gas especially if the spring is rather weak;
b) jamming of the spring due to corrosion, oxidation and spring breakage, so that it may be impossible to open and/or close the valve, with the consequent need to take action in accordance with special known procedures which are lengthy, costly and potentially dangerous;
c) spontaneous opening of the valve with consequent gas loss during transport, because of the inevitable vibration;
d) presence of steel parts in the valve, reducing by 50% the scrap value of a valve;
e) presence of at least two O-rings in contact with the gas, possibly constituting a source of gas contamination;
f) possibility of tampering with the gland nut without removing the operating handwheel, making it possible to tamper with the valve without this being brought to notice by breakage of the conventional guarantee seal located on said handwheel;
g) the geometry of the valve moving parts and their relative tolerances being such as to possibly aggravate the negative consequences of an adiabatic compression situation if the valve is opened too rapidly;
h) in cylinders provided with a valve of return spring type the valve has to be opened before the cylinder is placed on a cylinder filling rack on which several cylinders to be filled are simultaneously located, hence it can happen that if one of the cylinders present has a residual pressure (because it has not been completely emptied), when all the cylinders on the rack are connected together the residual pressure in the cylinder with the pressure residue can cause the valves of the remaining cylinders on the rack to close. The result is that only the cylinder with the residual pressure is filled;
i) possibility of galvanic corrosion of those mutually contacting valve parts constructed of different metals.

Before describing the typical drawbacks of valves in which the valving element is moved axially by mechanical means without the use of a return spring, a detailed description of a typical valve of this type will be given. It essentially consists of: a valve body having at one end a thread (in accordance with current regulations) enabling the valve to be mounted on the cylinder or on the rack, this threaded part enclosing a first axial channel for gas passage from the cylinder or rack to the valve and vice versa, the channel opening into the central hole of the valve seat provided in the chamber within the valve body; a threaded (again in accordance with regulations) lateral protuberance enclosing a second gas passage channel which opens into the inner chamber; a valving element in the form of a piston movable in both directions within the inner chamber and carrying on the front face of the piston a sealing insert which is pressed against the valve seat; a seal device to seal between the stem of the valving element and the valve body, and comprising at least two O-rings; and a mechanism for operating the valving element, comprising a threaded operating pin screwable within a gland nut screwed into the valve body, an operating handwheel being connected to the threaded pin. If the valve is of the type for single cylinders, the valve body thread is normally conical.

Although this type of valve does not suffer from the drawbacks stated under points a), b), c) and h) for valves with a return spring, it still suffers from the drawbacks under points d), e), f), g) and i). It has the further drawback (j) that the thread of the operating pin is interrupted by a recess for housing that mushroom-shaped end of the valving element stem distant from the valve seat. This gap in the operating pin produces a "cutting" effect on the relative female thread provided in the gland nut, so subjecting it to wear, with the formation of swarf and metal dust which remain in the valve, in addition to causing scraping, and hence removal, of the lubricant applied to said thread. The present invention also proposes to obviate the latter drawbacks (points d, e, f, g, i and j) of known valves with an axially moving valving element.

The main object of the present invention is to provide a gas cylinder valve, of the type comprising a valving element moving only axially and without a return spring, which does not give rise to the possible danger or reduced-safety situations of known valves of this type in terms of the negative consequences of adiabatic compression, ie to provide a valve offering greater protection against this phenomenon than known valves.

A second object is to provide a valve having a lower possibility of gas contamination caused by the presence of elastomer gaskets (as stated, in known valves there are at least two O-rings), and more generally to achieve a reduction in the non-metallic surfaces in contact with the gas.

A further object of the invention is to provide a valve of the stated type in which the constituent metal of the valve can be completely salvaged in the most simple manner, and hence at lower cost than in the case of known valves.

A further object is to obviate any possible corrosion of the constituent metal parts of the valve due to contact between different metals (galvanic corrosion caused, as is well known, by the difference in electronegativity between different metals in contact).

Said main object is achieved by the valve of the present invention, characterised in that the piston-type valving element comprises a coaxial front peg having a frusto-conical free end for closing the central hole in the valve seat, there being a clearance of between 0.0 mm and 0.1 mm between the peg and the hole when the valve is closed. This enables the gas to undergo a throttling effect on opening the valve, if the situation is such that the gas begins to flow to said first channel in the valve inner cavity (for example if the valve is a cylinder valve and is opened). In this manner the adiabatic compression effect following opening of the valve by the user is damped or substantially reduced, even if the valve is opened very rapidly. Preferably the frusto-conical end of the peg has a taper of between 1° and 7°.

In order to improve valve safety in respect of an adiabatic compression situation, a part of the lateral surface of the valving element intercepts said second valve channel in the manner of a gate valve. In this manner a gas throttling effect is also achieved with the valve closed, when the gas flows from the lateral protuberance on the valve into the inner chamber and hence into the axial gas passage duct.

In the case of a cylinder valve this situation occurs for example on filling the cylinder while on a filling rack.

Conveniently the valving element frontally comprises an annular projection for containing and protecting the sealing insert, by annularly surrounding this latter and exerting a containing and protecting action thereon.

To achieve the second stated object, the valve comprises a seal device between the stem of the piston-type valving element and the valve body, and comprising: an annular metal element surrounding the stem of the valving element and arranged to be pressed by the gland towards a coaxial annular sealing ledge provided within the valve body; an annular gasket formed of a metal suitable for sealing gaskets and arranged between the annular element and said annular ledge; and an elastomer seal ring positioned between the annular metal element and the stem of the valving element, between the central hole in the metal gasket and the stem of the valving element there being a clearance of between 0.01 mm and 0.5 mm.

Hence the seal device not only has only one elastomer seal element (in practice an O-ring), but the metal seal gasket also provides good protection for the elastomer seal element.

The said third object of the present invention is achieved by providing a valve of the aforesaid type in which all the metal parts are constructed of the same metal, conveniently brass (including the said annular gasket of the seal device). The absence of steel parts means that the valve can be directly and completely salvaged as scrap all of the same material, without any additional action being necessary and with significant economical advantage.

A valve of this type, in which the metal parts are all of the same material, also achieves the stated object of eliminating galvanic corrosion of the valve metal parts.

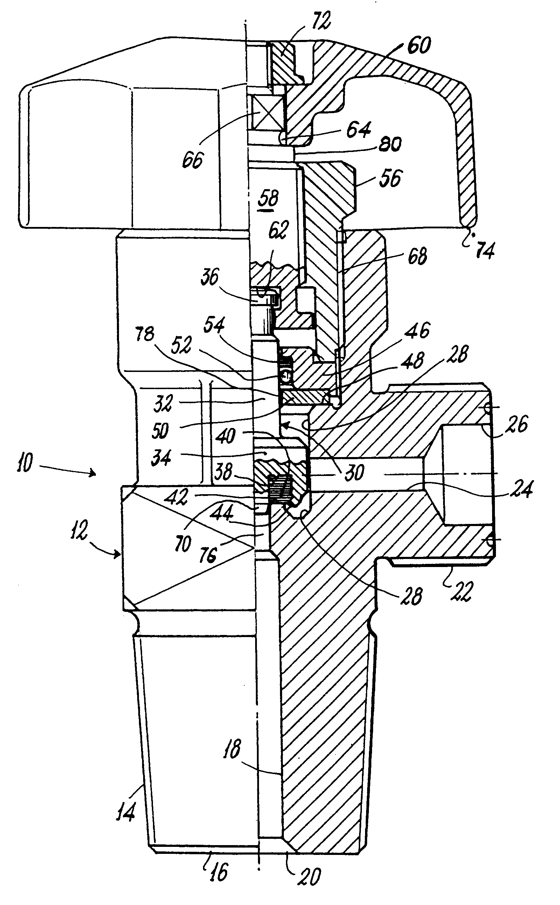

The invention will be more apparent from the following description of one embodiment thereof given by way of example only. In the description reference is made to the accompanying drawing, of which the single figure represents a side view of the valve, shown in partial section on an axial plane.

The figure shows a valve of the type specifically intended for compressed gas cylinders, with an axially mobile valving element and without a return spring. Specifically, the valve 10 comprises a body 12 constructed conventionally of brass. At the lower end of the body 12 there is a conical thread 14 enabling the valve 10 to be connected to a cylinder (not shown). The lower end of the body 12 encloses a first axial channel 18 for feeding gas from the cylinder through the valve 10, this channel opening to the outside at 20. The valve 10 also comprises a threaded lateral protuberance 22 enclosing a second channel 24 through which the gas leaves the valve and which opens to the outside at 26. Both the first channel 18 and the second channel 24 communicate with a chamber 28 provided in the valve body 12. A valving element 30, which can move within the chamber 28 in both directions coaxially to the first channel 18, is in the form of a piston comprising an overall cylindrical stem 32 and a lower head 34, the upper end 36 of the stem 32 being mushroom shaped. The head 34 of the valving element 30 comprises on its lower face a coaxial peg 70 with its free end frusto-conical and intended to close the central hole of the valve seat 42. With the valve closed, the clearance between the frusto-conical part of the peg 70 and the central hole of the relative valve seat 42 is as defined heretofore. This means that during the initial stage in the opening of the valve 10 the delivery is much less than for valves without a peg or with pegs not designed for this purpose.

The head 34 of the valving element 30 also comprises an annular recess 38 holding an annular sealing insert 40 of plastics material.

This latter, when the valve is closed (as in the figure), is pressed against the annular valve seat 42, to form the seal and hence close communication between the first channel 18 and the chamber 28. The head 34 of the valving element 30 also comprises a clinched coaxial annular projection 44 which surrounds, contains and protects the insert 40, so that when the valve is closed only a very thin annular strip of insert is exposed to the chamber 28 (and hence to the gas if the cylinder is being filled).

The chamber 28 is closed upperly by a seal device which seals between the stem 32 of the valving element and the interior of the body 12 of the valve 10. This seal device comprises an annular hat-shaped brass element 46 positioned coaxial to the stem 32.

Between the hat-shaped element 46 and an annular ledge 48 provided within the body 12 there is a flat annular gasket 50, also of brass, which acts as a seal gasket. Both the hat-shaped element 46 and the brass gasket 50 have a central hole of diameter just sufficient to allow the stem 32 to be inserted through them. The clearance between the central hole 78 of the gasket 50 and the stem 32 falls within the aforedefined range.

A single conventional elastomer O-ring 52 is provided within the hat-shaped element 46 above the brass gasket 50 and in contact with the stem 32 of the valving element 30, to complete the seal device. In the illustrated example, a conventional teflon antiextrusion ring 54 is provided above the O-ring 52 to prevent the O-ring being subjected to extrusion as a result of repeated operation of the valve 10 under high pressure conditions.

As can be seen, the O-ring 52 is the only elastomer seal element which can come into contact with the gas, in contrast to known valves of this type in which there are at least two O-rings. In addition the O-ring 52 is better protected because of the presence of the brass gasket 50, the central hole of which satisfies the defined clearances.

On suitably screwing down a gland nut 56, the hat-shaped element 46 is pressed against the brass gasket 50. The upper end of the gland nut 56 projects from the top of the valve body 12.

Conventionally, the gland nut 56 coaxially receives a threaded operating pin 58 which is screwed into it. Conventionally fixed to its upper end, the threaded operating pin 58 carries an operating handwheel 60. The other end of the pin 58 comprises a coaxial undercut seat 62 for receiving the mushroom-shaped upper end 36 of the stem 32. For the insertion of the end 36 into the seat 62, a corresponding aperture (not visible in the figure) has to be provided in the lateral surface of the threaded pin 58. As can be seen from the figure, in the valve 10 this aperture is below the thread of the pin 58, which is therefore not interrupted by the aperture, in contrast to known valves of this type. This obviates all the stated drawbacks consequent on interrupting said thread.

A further advantage of the illustrated valve 10 is that it is not possible to tamper with the gland nut 56 without removing the operating handwheel 60. As this latter is conventionally provided with a seal which identifies any tampering, in the case of the valve 10 an unbroken seal ensures that there has been no tampering.

It should be noted that the valve 10 comprises a relief groove 64 immediately below the square upper end 66 of the pin 58. The relief groove 64 ensures that the pin 58 fractures in a predetermined position if subjected to a torque exceeding a predetermined value. This torque is normally 2-3 times less than the torque which has to be applied to the gland nut 56 to unscrew it. As further protection, the gland nut 56 is provided with a left-handed thread to prevent it becoming accidentally unscrewed during opening by the handwheel 60, should the operator continue the left-handed movement after the valving element has been completely opened. The relief groove 64 is in a position on the operating pin 58 such that if the operating pin 58 were to fracture at 64, it would still project outwards from the gland nut 56 by an adequate portion 80. This means that the valve can still be operated by a suitable tool, such as pliers gripping the projecting portion 80.

As further protection for the illustrated valve, the handwheel 60 is fixed coaxially to the operating pin 58 by a fixing nut 72 which can be removed only by using a suitable tool and not by the hands alone.

It will also be noted that the lower edge 74 of the operating handwheel 60 covers the gland nut 56, so that this latter cannot be unscrewed without removing the handwheel, hence providing additional protection.

The operation of the valve 10 should be apparent from the aforegoing. However for greater clarity it will be briefly described with reference to its normal operation for delivering gas from a cylinder.

With the valve 10 closed (see the figure), the gas present in the cylinder fills the first coaxial channel 18 as far as the seal between the insert 40 and the seat 42 of the valve 10. On rotating the operating handwheel 60 anticlockwise the operating pin 58 also rotates in the same direction and by the effect of the thread 68 moves axially upwards, also dragging the piston-type valving element 30 upwards. Because of the presence of the frusto-conical peg 70, the passage for the gas contained in the cylinder is opened slowly, the gas being able to fill the chamber 28 and then reach the second lateral channel 24, 26 for delivery.

With the valve open, the seal device formed by the hat-shaped ring 46, the annular brass gasket 50 and the O-ring 52 always provides the necessary seal towards the outside.

The valve is reclosed by turning the operating handwheel 60 in the opposite direction until it stops.

## Claims

1. A valve (10) for gas cylinders, cylinder racks or stacks, cylinder filling racks and similar uses, of the type with an axially moving valving element without a return spring, and comprising: a valve body (12) provided with a thread (14) enabling the valve (10) to be mounted in position, this threaded part enclosing a first axial gas passage channel (18) opening into the central hole (76) of the valve seat (42) provided in the inner chamber (28) of the valve body (12); a threaded lateral protuberance (22) enclosing a second gas passage channel (24, 26) which opens into the inner chamber (28); a valving element (30) in the form of a piston movable in both directions within the chamber (28) and carrying on the front face of the piston a sealing insert (40) to be pressed against the valve seat (42); a seal device providing a seal between the stem (32) of the valving element (30) and the valve body (12); and a mechanism for operating the valving element (30), comprising a threaded operating pin (58) screwable within a gland nut (56) screwed into the valve body (12) and maintaining said seal device in position, an operating handwheel (60) being connected to the threaded pin (58), characterised in that the piston-type valving element (30) comprises a coaxial front peg (70) having a frusto-conical free end for closing the central hole (76) in the valve seat (42), there being a clearance of between 0.0 mm and 0.1 mm between the peg (70) and the hole (76) when the valve (10) is closed.

2. A valve as claimed in claim 1, wherein the frusto-conical end of the peg (70) has a taper of between 1° and 7°.

3. A valve (10) as claimed in claim 1 or 2, wherein a part of the lateral surface of the valving element (30) intercepts said second valve channel (24, 26) in the manner of a gate valve, the clearance between the gate valve and the relative seat being between 0.01 mm and 0.20 mm.

4. A valve (10) as claimed in any one of the preceding claims, wherein the valving element (30) comprises frontally a coaxial annular projection (44) for containing and protecting the sealing insert (40).

5. A valve (10) as claimed in any one of the preceding claims, wherein between the stem (32) of the valving element (30) and the valve body (12) there is a seal device comprising: an annular metal element (46) surrounding the stem (32) of the valving element (30) and arranged to be pressed by the gland nut (56) towards a coaxial annular sealing ledge (48) provided within the valve body (12); an annular gasket (50) formed of a metal suitable for sealing gaskets and arranged between the annular element (46) and the annular ledge (48); and an elastomer seal ring (52) positioned between the annular metal element (46) and the stem (32) of the valving element (30), between the central hole (78) in the metal gasket (50) and the stem (32) of the valving element (30) there being a clearance of between 0.01 mm and 0.5 mm.

6. A valve (10) as claimed in any one of the preceding claims, wherein all the metal parts are of the same material.

7. A valve (10) as claimed in claim 6, wherein the metal parts of the valve are of brass.

8. A valve (10) as claimed in any one of the preceding claims, wherein the aperture provided in the lateral surface of the operating pin (58) to allow the mushroom-shaped end (36) of the stem (32) of the valving element (30) to be inserted into the undercut cavity (62) at the inner end of the operating pin (58) is formed beyond the thread of said pin (58) so as not to interrupt it.

9. A valve (10) as claimed in any one of the preceding claims, wherein that edge (74) of the operating handwheel (60) facing the valve covers the gland nut (56) to prevent this latter (56) from being unscrewed unless the handwheel (60) has firstly been removed.

10. A valve as claimed in claim 9, wherein the operating handwheel (60) is fixed coaxial to the operating pin (58) by a fixing element (72) which can only be removed by using a suitable tool.

11. A valve as claimed in claim 10, wherein a seal is provided to indicate if the fixing element (72) for the handwheel (60) has been removed from the operating pin (58).

12. A valve (10) as claimed in any one of the preceding claims, wherein the screwing direction of the gland nut (56) is the opposite of the direction in which the handwheel (60) is turned to open the valve.

13. A valve (10) as claimed in any one of the preceding claims, wherein the operating pin (58) is provided with a preferential breakage section (64) in a predetermined position, in which position the operating pin (58) breaks if the operating torque exerted on the handwheel (60) exceeds a predetermined value.

14. A valve as claimed in claim 13, wherein the preferential breakage section (64) is provided in a position on the operating pin (58) such that after this latter has broken at the preferential breakage section (64), there projects from the gland nut (56) a portion of the operating pin (58) sufficient to enable the valve (10) to be operated by a suitable tool.
